# DEMANDE DE BREVET EUROPEEN

(11) **EP 4 819 484 A1**
(43) Date de publication de la demande: **07.10.2026**
(21) Numéro de dépôt: 26159759.5
(22) Date de dépôt: 20.02.2026
(51) Int. Cl.: H02S 20/10, H02S 20/24, H02S 20/30

(54) **SUPPORT DE FIXATION AU SOL DE PANNEAU SOLAIRE À CHOIX D'INCLINAISONS**

(30) Priorité: 14.03.2025 FR 2502591
(71) Demandeur: GSE Intégration, 93400 Saint-Ouen-sur-Seine (FR)
(72) Inventeur: DERIEN, Jonathan, 93400 SAINT OUEN SUR SEINE (FR); CHAMBAUDIE, Nicolas, 93400 SAINT OUEN SUR SEINE (FR); DELABRIOLLE, Arnaud, 93400 SAINT OUEN SUR SEINE (FR); MANRIC, Julien, 93400 SAINT OUEN SUR SEINE (FR); ROCK, Aroul, 93400 SAINT OUEN SUR SEINE (FR); PIROTH, Julie, 93400 SAINT OUEN SUR SEINE (FR)
(74) Mandataire: Loyer & Abello

(57) **Abrégé**

L'invention concerne un support de fixation au sol de panneau solaire à choix d'inclinaisons (I), comportant une structure de maintien au sol (1), une barre de soutien avant gauche (2a), une barre de soutien avant droite (2b) comprenant chacune une section de fixation avant (210), une barre de soutien arrière gauche (3a) et une barre de soutien arrière droite (3b), comprenant chacune une première section de fixation arrière (310) et une deuxième section de fixation arrière (320), un système de pose (4) comportant un rail avant (4a) et un rail arrière (4b) destinés à recevoir au moins un panneau (II) solaire, deux équerres avant et deux équerres arrière (5), chacune composée d'une aile de support (5a) fixée au système de pose et d'une aile de montage (5b) fixée à l'une des barres de soutien, l'aile de montage comportant un trou de fixation (50) et au moins un trou d'orientation (51).

## Description

### Domaine technique

L'invention se rapporte au domaine des énergies renouvelables, et notamment de l'énergie solaire.

L'objet de l'invention concerne plus particulièrement les systèmes de fixation au sol pour panneau solaire et notamment un support de fixation au sol à choix d'inclinaisons destiné à recevoir au moins un panneau solaire.

### Arrière-plan technologique

Dans l'art antérieur, il est connu que, pour obtenir une production énergétique optimale, les panneaux solaires doivent être inclinés suivant un angle d'inclinaison particulier, en fonction de la localisation du panneau.

Afin d'incliner un panneau solaire, un support de fixation au sol de panneau solaire peut comporter des équerres de fixation, fixées d'une part à une structure de maintien au sol et d'autre part à des rails de maintien d'un panneau solaire. Lesdites équerres nécessitent d'être pliées à un certain angle pour incliner le panneau solaire suivant l'angle d'inclinaison souhaité.

### Résumé de l'invention

Une idée à la base de l'invention est de simplifier le montage et l'inclinaison d'un panneau solaire fixé au sol, notamment en limitant les étapes et les outillages nécessaires au montage du panneau solaire.

Selon un mode de réalisation, l'invention fournit un support de fixation au sol de panneau solaire à choix d'inclinaisons, destiné à être équipé d'au moins un panneau solaire, comportant :
- Une structure de maintien au sol comprenant une paroi avant et une paroi arrière ;
- Une barre de soutien avant gauche et une barre de soutien avant droite s'étendant selon une première direction et disposées de part et d'autre de la paroi avant, les barres de soutien avant gauche et avant droite comprenant chacune une section de fixation avant faisant saillie de la paroi avant dans la première direction, chaque section de fixation avant comprenant un orifice de fixation avant, un premier orifice d'orientation avant correspondant à une première inclinaison de panneau et un deuxième orifice d'orientation avant correspondant à une deuxième inclinaison de panneau ;

- Une barre de soutien arrière gauche et une barre de soutien arrière droite s'étendant selon la première direction et disposées de part et d'autre de la paroi arrière, les barres de soutien arrière gauche et arrière droite comprenant chacune au moins une première section de fixation arrière et une deuxième section de fixation arrière faisant saillie de la paroi arrière dans la première direction, la deuxième section de fixation arrière étant disposée en-dessous de la première section de fixation arrière, la première section de fixation arrière comprenant un premier orifice de fixation arrière, et un premier orifice d'orientation arrière correspondant à la première inclinaison de panneau, la deuxième section de fixation arrière comprenant un deuxième orifice de fixation arrière, et un deuxième orifice d'orientation arrière correspondant à la deuxième inclinaison de panneau ;
- Un système de pose comportant un rail avant et un rail arrière destinés à recevoir au moins un panneau solaire ;
- Deux équerres avant et deux équerres arrière, chacune composée d'une aile de support fixée au système de pose et d'une aile de montage fixée à l'une des barres de soutien, l'aile de montage étant perpendiculaire à l'aile de support, l'aile de montage comportant un trou de fixation et d'au moins un trou d'orientation,
dans lequel pour une pose selon la première inclinaison de panneau, chacune des équerres avant est fixée à l'une des barres de soutien avant à l'aide d'un premier dispositif de fixation traversant le trou de fixation de l'équerre avant et l'orifice de fixation avant de la section de fixation avant, et d'un deuxième dispositif de fixation traversant le trou d'orientation de l'équerre avant et le premier orifice d'orientation avant de la section de fixation avant, et chacune des équerres arrière est fixée à l'une des barres de soutien arrière à l'aide d'un premier dispositif de fixation traversant le trou de fixation de l'équerre arrière et le premier orifice de fixation arrière de la première section de fixation arrière, et d'un deuxième dispositif de fixation traversant le trou d'orientation de l'équerre arrière et le premier orifice d'orientation arrière de la première section de fixation arrière,
et dans lequel pour une pose selon la deuxième inclinaison de panneau, chacune des équerres avant est fixée à l'une des barres de soutien avant à l'aide d'un premier dispositif de fixation traversant le trou de fixation de l'équerre avant et l'orifice de fixation avant de la section de fixation avant, et d'un deuxième dispositif de fixation traversant le trou d'orientation de l'équerre avant et le deuxième orifice d'orientation avant de la section de fixation avant, et chacune des équerres arrière est fixée à l'une des barres de soutien arrière à l'aide d'un premier dispositif de fixation traversant le trou de fixation de l'équerre arrière et le deuxième orifice de fixation arrière de la deuxième section de fixation arrière, et d'un deuxième dispositif de fixation traversant le trou d'orientation de l'équerre arrière et le deuxième orifice d'orientation arrière de la deuxième section de fixation arrière.

Grâce à ces caractéristiques, le support de fixation au sol permet à un utilisateur de monter simplement un panneau solaire suivant plusieurs angles d'inclinaison. En effet, à l'aide notamment des différents trous d'orientation des sections de fixation, il est possible pour un opérateur de fixer et orienter simplement les équerres à l'inclinaison choisie sans avoir à retravailler l'angle d'inclinaison des équerres. Ainsi, l'opérateur gagne un temps significatif dans le temps de montage tout en assurant une inclinaison précise des panneaux.

Selon des modes de réalisation, un tel support peut comporter une ou plusieurs des caractéristiques suivantes.

Selon un mode de réalisation, la première direction est la direction verticale.

Selon un mode de réalisation, les barres de soutien arrière gauche et arrière droite comprennent N sections de fixation arrière, avec N un entier naturel supérieur ou égal à 3.

Ainsi, le support de fixation peut s'adapter à N angles d'inclinaison prédéfinis. Par exemple, ces inclinaisons peuvent être comprises entre 5° et 40° par rapport à une direction horizontale.

Selon un mode de réalisation, la structure de maintien au sol comporte une base, une paroi avant et une paroi arrière, assemblées les unes aux autres de manière à former un espace de lestage, l'espace de lestage rempli d'un matériau lestant.

Selon un mode de réalisation, la structure de maintien au sol comporte une base, une paroi avant, une paroi arrière et deux parois latérales, assemblées les unes aux autres de manière à former un espace de lestage, l'espace de lestage étant rempli d'un matériau lestant.

Ledit matériau lestant peut être par exemple du gravier, du sable, des pierres ou des dalles de béton.

Selon un mode de réalisation, les parois latérales, la paroi avant et la paroi arrière sont assemblées de manière que la projection verticale desdites parois forme un rectangle.

Ainsi, le support de fixation au sol peut être installé et stabilisé dans un environnement extérieur. Le support de fixation n'impliquant pas d'ancrage au sol, il peut facilement être retiré de son emplacement, et déplacé.

Selon un mode de réalisation, le panneau solaire est un panneau photovoltaïque.

Selon un mode de réalisation, la barre de soutien avant gauche, la barre de soutien avant droite, la barre de soutien arrière gauche et la barre de soutien arrière droite sont des cornières.

Selon un mode de réalisation, les faces internes desdites cornières sont complémentaires des angles externes formés par la structure de maintien au sol.

Ainsi, le montage des barres de soutien sur la structure de maintien au sol est facilité par la forme complémentaire des éléments. La conception en cornière des barres de soutien facilite également leur manutention et simplifie la fixation des équerres sur les sections de fixation.

Selon un mode de réalisation, les parois avant, arrière et latérales sont assemblées aux barres de soutien avant et arrière suivant un système de montage crochet/orifice, chaque crochet étant complémentaire d'un orifice.

Selon un mode de réalisation, la paroi avant, la paroi arrière et les parois latérales de la structure de maintien au sol comprennent chacune des orifices de montage et les barres de soutien comprennent chacune des crochets, complémentaires des orifices de montage.

Ainsi, le montage des barres de soutien avec la structure de maintien est facilité par le montage des parois avant et arrière sur lesdits crochets.

Selon un mode de réalisation, les équerres avant et les équerres arrière sont identiques.

Ainsi, la fabrication des équerres avant et des équerres arrière est plus facile. Aussi, la manutention des éléments du support de fixation au sol est simplifiée.

Selon un mode de réalisation, les équerres avant et/ou les équerres arrière comportent une pluralité de trous d'orientation.

Selon un mode de réalisation, les sections de fixation sont séparées par des lignes de démarcation.

Selon un mode de réalisation, chacune des sections de fixation comprend un marquage qui indique l'angle d'inclinaison de panneau correspondant.

Selon un autre mode de réalisation, les sections de fixation sont séparées par des lignes de découpe pré-découpées.

Ainsi, si l'une des deuxièmes inclinaisons est choisie par un utilisateur, la barre de soutien arrière peut être découpée facilement par un utilisateur à la ligne de découpe adéquate, par exemple au moyen d'une scie ou d'une meuleuse, de sorte que la section de fixation située au plus haut de la barre de soutien arrière soit la section de fixation adaptée à l'inclinaison choisie.

Un autre objet de l'invention est un ensemble solaire comportant un support de fixation au sol précité et au moins un panneau solaire, le panneau solaire étant fixé au système de pose.

Selon un mode de réalisation, l'ensemble solaire comporte au moins deux supports de fixation au sol et une pluralité de panneaux solaires fixés deux par deux sur chaque support de fixation au sol.

Un autre objet de l'invention est un procédé de fixation au sol d'au moins un panneau solaire maintenu par un support de fixation au sol comprenant les étapes suivantes :
* Fournir :
   - une structure de maintien au sol comprenant une paroi avant et une paroi arrière,
   - une barre de soutien avant gauche et une barre de soutien avant droite comprenant chacune une section de fixation avant, chaque section de fixation avant comprenant un orifice de fixation avant, un premier orifice d'orientation avant et un deuxième orifice d'orientation avant,
   - une barre de soutien arrière gauche et une barre de soutien arrière droite, chacune comprenant au moins une première section de fixation arrière et une deuxième section de fixation arrière, la deuxième section de fixation arrière étant disposée en-dessous de la première section de fixation arrière, la première section de fixation arrière comprenant un premier orifice de fixation arrière, un premier orifice d'orientation arrière, la deuxième section de fixation arrière comprenant un deuxième orifice de fixation arrière, et un deuxième orifice d'orientation arrière ;
   - un système de pose comportant un rail avant et un rail arrière,
   - deux équerres avant et deux équerres arrière, chacune composée d'une aile de support et d'une aile de montage, l'aile de montage étant perpendiculaire à l'aile de support, l'aile de montage comportant un trou de fixation et d'au moins un trou d'orientation,
   - un panneau solaire, et ;
* Monter :
   - la barre de soutien avant gauche et la barre de soutien avant droite contre la structure de maintien au sol de part et d'autre de la paroi avant de sorte que la barre de soutien avant gauche et la barre de soutien avant droite s'étendent selon une première direction, la section de fixation avant faisant saillie de la paroi avant dans la première direction,
   - la barre de soutien arrière gauche et la barre de soutien arrière droite contre la structure de maintien au sol, de part et d'autre de la paroi arrière de sorte que la barre de soutien arrière gauche et la barre de soutien arrière droite s'étendent selon la première direction, la première section de fixation arrière faisant saillie de la paroi arrière dans la première direction,
* Choisir par l'opérateur entre une première inclinaison et une deuxième inclinaison pour la fixation du panneau solaire,
* Si la première inclinaison a été choisie, fixer chacune des équerres avant à l'une des barres de soutien avant à l'aide d'un premier dispositif de fixation traversant le trou de fixation de l'équerre avant et l'orifice de fixation avant de la section de fixation avant, et à l'aide d'un deuxième dispositif de fixation traversant le trou d'orientation de l'équerre avant et le premier orifice d'orientation avant de la section de fixation avant, et fixer chacune des équerres arrière à l'une des barres de soutien arrière à l'aide d'un premier dispositif de fixation traversant le trou de fixation de l'équerre arrière et le premier orifice de fixation arrière de la première section de fixation arrière, et à l'aide d'un deuxième dispositif de fixation traversant le trou d'orientation de l'équerre arrière et le premier orifice d'orientation arrière de la première section de fixation arrière,
* Si la deuxième inclinaison a été choisie, fixer chacune des équerres avant à l'une des barres de soutien avant à l'aide d'un premier dispositif de fixation traversant le trou de fixation de l'équerre avant et l'orifice de fixation avant de la section de fixation avant, et à l'aide d'un deuxième dispositif de fixation traversant le trou d'orientation de l'équerre avant et le deuxième orifice d'orientation avant de la section de fixation avant, et fixer chacune des équerres arrière à l'une des barres de soutien arrière à l'aide d'un premier dispositif de fixation traversant le trou de fixation de l'équerre arrière et le deuxième orifice de fixation arrière de la deuxième section de fixation arrière, et à l'aide d'un deuxième dispositif de fixation traversant le trou d'orientation de l'équerre arrière et le deuxième orifice d'orientation arrière de la deuxième section de fixation arrière, et ;
* Fixer l'aile de support de chacune des deux équerres avants au rail avant et l'aile de support de chacune des deux équerres arrières au rail arrière, et
* Fixer le panneau solaire au rail avant et au rail arrière.

Un autre objet de l'invention est un procédé de fixation au sol selon lequel si une deuxième inclinaison a été choisie, le procédé comprend avant l'étape de fixation des équerres arrière, une étape de découpe des barres de soutien arrière suivant une ligne de découpe séparant la première section de fixation arrière de la deuxième section de fixation arrière.

Selon un autre mode de réalisation, l'invention est un support de fixation au sol de panneau solaire à choix d'inclinaisons, destiné à être équipé d'au moins un panneau solaire, comportant :
- Une structure de maintien au sol comprenant une paroi avant, une paroi arrière et deux parois latérales ;
- Une barre de soutien avant gauche et une barre de soutien avant droite s'étendant selon une première direction et disposées de part et d'autre de la paroi avant, les barres de soutien avant gauche et avant droite comprenant chacune une section de fixation avant faisant saillie de la paroi avant dans la première direction, chaque section de fixation avant comprenant un orifice de fixation avant, un premier orifice d'orientation avant correspondant à une première inclinaison de panneau et un deuxième orifice d'orientation avant correspondant à une deuxième inclinaison de panneau ;
- Une barre de soutien arrière gauche et une barre de soutien arrière droite s'étendant selon la première direction et disposées de part et d'autre de la paroi arrière, les barres de soutien arrière gauche et arrière droite comprenant chacune au moins une première section de fixation arrière et une deuxième section de fixation arrière faisant saillie de la paroi arrière dans la première direction, la deuxième section de fixation arrière étant disposée en-dessous de la première section de fixation arrière, la première section de fixation arrière comprenant un premier orifice de fixation arrière, et un premier orifice d'orientation arrière correspondant à la première inclinaison de panneau, la deuxième section de fixation arrière comprenant un deuxième orifice de fixation arrière, et un deuxième orifice d'orientation arrière correspondant à la deuxième inclinaison de panneau ;
- Un système de pose comportant un rail avant et un rail arrière destinés à recevoir au moins un panneau solaire ;
- deux équerres avant et deux équerres arrière, chacune composée d'une aile de support fixée au système de pose et d'une aile de montage fixée à l'une des barres de soutien, l'aile de montage étant perpendiculaire à l'aile de support, l'aile de montage comportant un trou de fixation et d'au moins un trou d'orientation, et ;
- Un système de montage, caractérisé par le fait que les parois avant, arrière et latérales sont assemblées aux barres de soutien avant et arrière suivant un système de montage crochet/orifice, chaque crochet étant complémentaire d'un orifice.

Selon un mode de réalisation, la paroi avant et la paroi arrière de la structure de maintien au sol comprennent chacune des orifices de montage et que les barres de soutien comprennent chacune des crochets, complémentaires desdits orifices de montage.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
La figure 1 est une vue en perspective qui illustre le support de fixation au sol selon un mode de réalisation.
La figure 2 est une vue de côté représentant le support de fixation au sol au niveau de la barre de soutien arrière gauche pour une première inclinaison.
La figure 3 est une vue du détail III de la figure 1, représentant le support de fixation au sol au niveau des barres de soutien avant.
La figure 4 est une vue de côté représentant le support de fixation au sol pour une deuxième inclinaison.
La figure 5 est une vue de côté représentant le support de fixation au sol au niveau de la barre de soutien arrière gauche pour la deuxième inclinaison.
La figure 6 est une vue en perspective détaillée de la section de fixation avant au niveau de la barre de soutien avant droite.
La figure 7 est une vue en perspective représentant les barres de soutien montées sur la structure de maintien au sol.
La figure 8 est une vue du détail VIII de la figure 7, représentant le montage des parois de la structure de maintien au sol sur les barres de soutien.

### Description des modes de réalisation

L'objet de l'invention sera mieux compris à l'aide de la description détaille suivante et des figures.

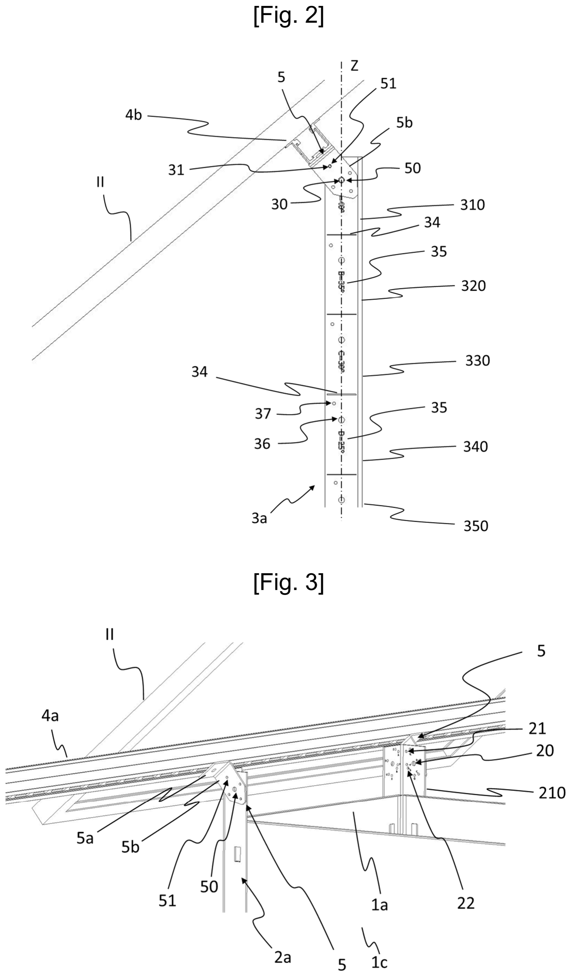

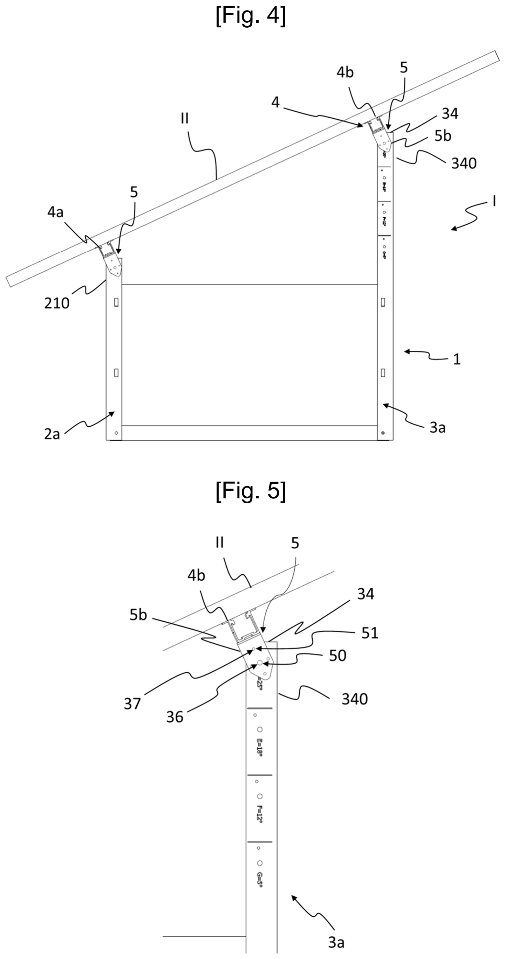

Aussi, l'ensemble des modes de réalisation décrits ci-après relatifs aux figures 2 et 5 ne sont aucunement limités à la barre de soutien arrière gauche 3a, et sont identiques pour la barre de soutien arrière droite 3b.

Les modes de réalisation décrits ci-après relatifs à la figure 4 ne sont aucunement limités à la barre de soutien avant gauche 2a et arrière gauche 3a, et sont identiques pour la barre de soutien avant droite 2b et arrière droite 3b.

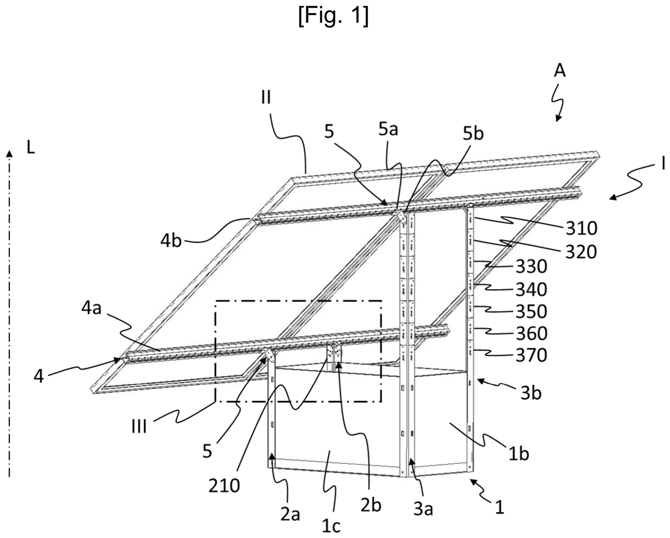

On a représenté à la figure 1 le support de fixation au sol I équipé de deux panneaux Il photovoltaïques, formant un ensemble solaire A, selon un mode de réalisation particulier.

Le support de fixation I comporte une structure de maintien au sol 1, ladite structure de maintien au sol 1 comprenant une paroi avant et une paroi arrière 1b. La structure de maintien au sol 1 comprend également deux parois latérales 1c, reliant la paroi avant à la paroi arrière 1b.

Le support de fixation I comporte une barre de soutien avant gauche 2a et une barre de soutien avant droite 2b s'étendant selon une première direction, ici la direction verticale L, et disposées de part et d'autre de la paroi avant, les barres de soutien avant gauche 2a et avant droite 2b comprenant chacune une section de fixation avant 210 faisant saillie de la paroi avant dans la première direction L.

Le support de fixation I comporte une barre de soutien arrière gauche 3a et une barre de soutien arrière droite 3b s'étendant selon la première direction L et disposées de part et d'autre de la paroi arrière 1b, les barres de soutien arrière gauche 3a et arrière droite 3b comprenant chacune une première section de fixation arrière 310 et, dans ce mode de réalisation illustré, six autres sections de fixation arrière faisant saillie de la paroi arrière 1b dans la première direction L et étant disposées en-dessous de la première section de fixation arrière 310.

Le support de fixation I comporte un système de pose 4 comportant un rail avant 4a et un rail arrière 4b, lesdits rail avant 4a et arrière 4b accueillant deux panneaux II photovoltaïques.

Tel que cela ressort de la figure 1, le support de fixation I comporte deux équerres avant 5 et deux équerres arrière 5, chacune composée d'une aile de support 5a fixée au système de pose 4 et d'une aile de montage 5b fixée à l'une des barres de soutien, l'aile de montage 5b étant perpendiculaire à l'aile de support 5a.

Selon un mode de réalisation, les moyens de fixation des ailes de support 5a au système de pose 4 peuvent être un ensemble vis et écrou mais d'autres moyens de fixation pourraient être utilisés.

Un des objets de l'invention étant de fournir un support de fixation I à choix d'inclinaisons destiné à être équipé d'au moins un panneau II, le mode de réalisation illustré sur les figures 1 à 8 permet à un opérateur de choisir entre sept inclinaisons pour la fixation d'un panneau II.

Selon un autre mode de réalisation, un opérateur pourrait choisir entre N inclinaisons, avec N un entier naturel supérieur ou égal à 2.

Tel que cela ressort sur les figures 1 à 2, les barres de soutien arrière comportent une pluralité de sections de fixation arrière, disposées en-dessous de la première section de fixation arrière 310, ladite première section de fixation arrière 310 étant située à l'extrémité supérieure de chaque barre de soutien arrière.

Comme illustré en figure 2, chacune desdites sections de fixation arrière comprend un orifice de fixation arrière et un orifice d'orientation arrière. Les orifices de fixation sont alignés sur la barre de soutien arrière gauche 3a suivant un même axe, ici l'axe vertical Z. Chaque orifice d'orientation arrière est désaxé par rapport audit axe vertical Z et de fait par rapport à l'orifice de fixation arrière.

Lorsqu'une équerre arrière 5 est fixée à une barre de soutien arrière, un premier dispositif de fixation traverse le trou de fixation de l'équerre arrière et un orifice de fixation d'une section de fixation arrière, et un deuxième dispositif de fixation traverse le trou d'orientation de ladite équerre arrière et un orifice d'orientation arrière de ladite section de fixation arrière. Lesdits dispositifs de fixation peuvent être par exemple un ensemble vis et écrou, mais d'autres dispositifs de fixation pourraient être utilisés.

Ainsi, pour une section de fixation arrière donnée, la disposition de l'orifice d'orientation arrière par rapport à l'orifice de fixation arrière est telle qu'une fois le premier dispositif de fixation traversant le trou de fixation 50 de l'équerre arrière 5 et l'orifice de fixation arrière de ladite section de fixation arrière, l'équerre arrière 5 doit être orientée autour de son trou de fixation 50 selon une orientation particulière pour permettre au deuxième dispositif de fixation de traverser le trou d'orientation 51 de l'équerre arrière et un orifice d'orientation arrière.

Lorsqu'une équerre arrière est fixée à une section de fixation arrière, ladite équerre arrière présente une orientation autour de son trou de fixation correspondant à une inclinaison de panneau II. Ainsi, chaque section de fixation arrière correspond à une inclinaison de panneau II.

Dans le mode de réalisation illustré sur la figure 1, la première section de fixation arrière 310 correspond à une première inclinaison de 40°, une deuxième section de fixation arrière 320 correspondant à une deuxième inclinaison de 35°, une troisième section de fixation arrière 330 correspondant à une troisième inclinaison de 30°, une quatrième section de fixation arrière 340 correspondant à une quatrième inclinaison de 25°, une cinquième section de fixation arrière 350 correspondant à une cinquième inclinaison de 18°, une sixième section de fixation arrière 360 correspondant à une sixième inclinaison de 12°, et une septième section de fixation arrière 370 correspondant à une septième inclinaison de 5°. Toutefois, le support de fixation I n'est aucunement limité aux angles d'inclinaison précités, et pourrait être adapté à d'autres combinaisons d'angles d'inclinaison.

Selon un autre mode de réalisation, les barres de soutien arrière comprennent un nombre N de sections de fixation arrière correspondant à N angles d'inclinaison, avec N un entier naturel supérieur ou égal à 2.

Tel que cela ressort sur la figure 2, les sections de fixation arrière sont séparées par des lignes de découpe 34. En ce sens, lorsque le choix de l'inclinaison est réalisé, un opérateur peut découper la barre de soutien arrière gauche 3a suivant la ligne de découpe 34 au moyen d'un outillage non-représenté, par exemple une scie ou une meuleuse.

Ce mode de réalisation permet, lorsque l'inclinaison choisie est autre que la première inclinaison, d'adapter par une simple opération le support de fixation au sol en adaptant les barres de soutien arrière à la hauteur de la section de fixation arrière correspondante.

Comme représenté sur la figure 2, chaque section de fixation arrière peut présenter, en sa face extérieure, un marquage 35 de l'angle d'inclinaison correspondant, par exemple sous forme de gravure.

Toutefois, comme illustré sur la figure 1, les panneaux **Il** sont montés sur le rail avant 4a et le rail arrière 4b. Ainsi, pour assurer un montage des panneaux II sur le système de pose 4, le rail avant 4a doit présenter la même orientation que le rail arrière 4b.

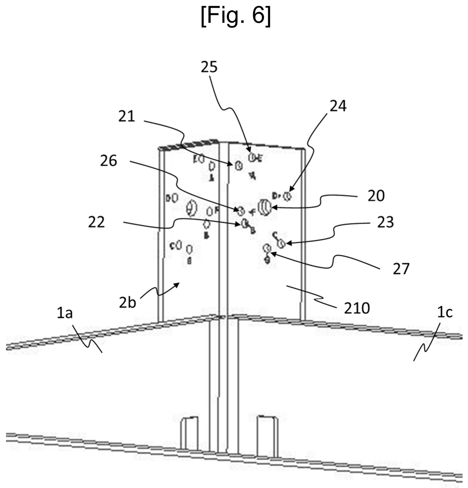

Ainsi, tel que cela ressort en figure 6, la section de fixation avant 210 comprend sept orifices d'orientation avant, lesdits orifices d'orientation avant permettant d'orienter le rail avant selon sept orientations correspondant aux sept orientations possibles des équerres arrière.

Pour ce faire, lors de la fixation de l'équerre avant 5 à la section de fixation avant 210, un premier dispositif de fixation est destiné à traverser le trou de fixation 50 et l'orifice de fixation avant 20, et un deuxième dispositif de fixation est destiné à traverser le trou d'orientation 51 et l'un des sept orifices d'orientation avant 21, 22, 23, 24, 25, 26, 27. Lesdits dispositifs de fixation peuvent être par exemple un ensemble vis et écrou, mais d'autres dispositifs de fixation pourraient être utilisés.

La disposition desdits orifices d'orientation avant par rapport à l'orifice de fixation avant 20 est telle qu'une fois le premier dispositif de fixation traversant le trou de fixation 50 et le premier orifice de fixation avant 20, l'équerre avant 5 doit être orientée autour de son trou de fixation 50 selon l'une des sept orientations pour permettre au deuxième dispositif de fixation de traverser le trou d'orientation 51 et l'un des sept orifices d'orientation avant.

Lorsqu'une équerre avant est fixée à une section de fixation avant, ladite équerre avant présente une orientation autour de son trou de fixation correspondant à une inclinaison de panneau II. Ainsi, chaque orifice d'orientation avant correspond à une inclinaison de panneau II.

Le support de fixation au sol est tel que le premier orifice d'orientation avant et la première section de fixation arrière correspondant à une même première inclinaison de panneau. Le deuxième orifice d'orientation avant et la deuxième section de fixation arrière correspondant à une même deuxième inclinaison de panneau. Le troisième orifice d'orientation avant et la troisième section de fixation arrière correspondant à une même troisième inclinaison de panneau. Le quatrième orifice d'orientation avant et la quatrième section de fixation arrière correspondant à une même quatrième inclinaison de panneau. Le cinquième orifice d'orientation avant et la cinquième section de fixation arrière correspondant à une même cinquième inclinaison de panneau. Le sixième orifice d'orientation avant et la sixième section de fixation arrière correspondant à une même sixième inclinaison de panneau. Le septième orifice d'orientation avant et la septième section de fixation arrière correspondant à une même septième inclinaison de panneau.

D'autres modes de réalisation permettant d'obtenir N angles d'inclinaison de panneau impliqueraient un support de fixation comportant N sections de fixation arrière et N orifices d'orientation avant, avec N un entier naturel supérieur ou égal à 2.

Comme représenté sur la figure 6, chaque section de fixation avant 210 peut présenter, à proximité de chaque orifice d'orientation avant, un marquage. Ce marquage contient le nom de la section de fixation arrière correspondant à l'orifice d'orientation avant, ou l'angle d'inclinaison correspondant à l'orifice d'orientation avant. Ledit marquage peut se présenter par exemple sous forme de gravure.

Comme illustré en figure 3, l'aile de montage 5b de l'équerre dispose de quatre trous d'orientation 51 permettant d'adapter l'orientation de l'équerre avant aux sept orifices d'orientation avant.

Selon un autre mode de réalisation, l'aile de montage 5b pourrait comporter un nombre N de trous d'orientation, avec N un entier naturel supérieur ou égal à 2.

Selon le mode de réalisation représenté sur les figures 1 à 3, deux panneaux Il photovoltaïques sont fixés au support de fixation au sol I pour une première inclinaison.

Comme illustré sur la figure 2, l'équerre arrière 5 est fixée à la première section de fixation 310. Un premier dispositif de fixation traverse le trou de fixation 50 et le premier orifice de fixation arrière 30. Un deuxième dispositif de fixation traverse le trou d'orientation 51 et le premier orifice d'orientation arrière 31, orientant l'équerre arrière autour de son trou de fixation selon une première orientation.

L'aile de support étant fixée au rail arrière 4b, ledit rail arrière 4b est orienté suivant la même première orientation que l'équerre arrière 5.

Pour orienter le rail avant selon la même première orientation que le rail arrière, et tel que cela ressort sur la figure 3, chacune des deux équerres avant 5 est fixée d'une part au rail avant 4a et à une section de fixation avant 210. Un premier dispositif de fixation traversant le trou de fixation 50 de chaque équerre avant 5 et l'orifice de fixation avant 20. Un deuxième dispositif de fixation traversant le trou d'orientation 51 de chaque équerre avant 5 et le premier orifice d'orientation avant 21, orientant lesdites équerres avant 5, et de fait le rail avant, selon la première orientation.

Comme illustré en figure 1, le panneau Il étant monté sur ledit système de pose 4, ledit panneau II est alors incliné selon la première inclinaison, dans l'exemple représenté 40°.

On a représenté aux figures 4 à 5 un mode de réalisation selon lequel le support de fixation au sol I est équipé d'un panneau II pour une quatrième inclinaison de panneau, plus particulièrement 25°.

Ce mode de réalisation est représenté plus précisément à la figure 5, illustrant une équerre arrière 5 fixée à la barre de soutien arrière 3a à l'aide d'un premier dispositif de fixation traversant le trou de fixation 50 de l'équerre arrière 5 et le quatrième orifice de fixation arrière 36 et d'un deuxième dispositif de fixation traversant le trou d'orientation 51 de l'équerre arrière 5 et le quatrième orifice d'orientation arrière 37 de la quatrième section de fixation arrière 340, orientant l'équerre arrière 5 selon une quatrième orientation.

Afin de permettre la fixation du panneau II, la première, deuxième et troisième section de fixation arrière 310, 320, 330, situées au-dessus de la quatrième section de fixation arrière 340, ont été découpées de la barre de soutien arrière gauche 3a suivant la ligne de découpe 34.

Comme illustré en figure 4, l'équerre avant 5 fixée à la barre de soutien avant gauche 2a et l'équerre arrière 5 fixée à la barre de soutien arrière gauche 3a sont orientées selon une même quatrième orientation. Tel que cela ressort sur la figure 6, chaque équerre avant est destinée à être fixée à la section de fixation avant 210 à l'aide d'un premier dispositif de fixation traversant le trou de fixation de l'équerre avant et l'orifice de fixation avant, et d'un deuxième dispositif de fixation traversant le trou d'orientation de l'équerre 5 avant et le quatrième orifice d'orientation avant de la section de fixation avant 210, orientant chaque équerre selon la quatrième orientation.

Comme représenté en figure 4, le système de pose 4 étant fixé d'une part aux équerres avant et arrière 5 et au panneau II, ledit panneau II est incliné selon la quatrième inclinaison, dans l'exemple représenté 25°.

On a représenté ce mode de réalisation pour la quatrième inclinaison à 25° mais ce mode de réalisation pourrait être adapté à l'inclinaison d'un panneau pour d'autres inclinaisons et suivant un même fonctionnement.

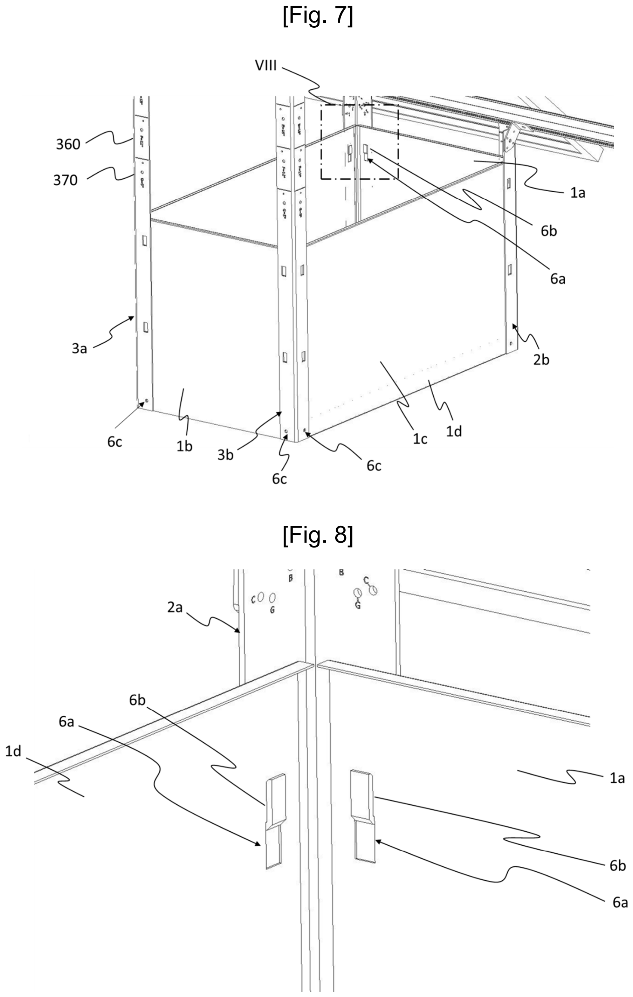

Selon la figure 7, la paroi avant 1a, la paroi arrière 1b et les parois latérales 1c comprennent chacune des orifices de montage 6a et les barres de soutien avant et arrière comprennent chacune des crochets 6b, complémentaires desdits orifices de montage 6a.

À l'inverse du mode de réalisation précédent, selon un autre mode de réalisation non représenté sur les figures, la paroi avant 1a, la paroi arrière 1b et les parois latérales 1c comprennent chacune des crochets 6b, et les barres de soutien avant et arrière comprennent chacune des orifices de montage, complémentaires desdits crochets.

Le montage de la barre de soutien avant droite 2b et de l'équerre avant est illustré en figure 6. L'orifice de fixation avant 20 est fixé au trou de fixation de l'équerre avant 5.

Avantageusement comme visible en figure 7, les barres de soutien comprennent chacune deux trous de maintien 6c. La base 1d et les parois comprennent des orifices de maintien, chacun positionné coaxialement à un trou de maintien 6c afin de permettre un assemblage entre les barres de soutien, les parois, et la base, par exemple par un ensemble vis et écrou. Dans un autre mode de réalisation non illustré, chaque trou de maintien 6c peut être taraudé, permettant la fixation des barres de soutien, des parois et de la base par vissage sans écrou.

Selon un mode avantageux de l'invention représenté en détail à la figure 8, les orifices de montage 6a sont des trous oblongs, permettant un assemblage facile des crochets 6b dans lesdits orifices de montage 6a.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Support de fixation au sol de panneau solaire à choix d'inclinaisons (I), destiné à être équipé d'au moins un panneau (II) solaire, comportant :
- Une structure de maintien au sol (1) comprenant une paroi avant (1a) et une paroi arrière (1b) ;
- Une barre de soutien avant gauche (2a) et une barre de soutien avant droite (2b) s'étendant selon une première direction et disposées de part et d'autre de la paroi avant (1a), les barres de soutien avant gauche et avant droite comprenant chacune une section de fixation avant (210) faisant saillie de la paroi avant dans la première direction (L), chaque section de fixation avant comprenant un orifice de fixation avant (20), un premier orifice d'orientation avant (21) correspondant à une première inclinaison de panneau (II) et un deuxième orifice d'orientation avant (22) correspondant à une deuxième inclinaison de panneau (II) ;
- Une barre de soutien arrière gauche (3a) et une barre de soutien arrière droite (3b) s'étendant selon la première direction et disposées de part et d'autre de la paroi arrière (1b), les barres de soutien arrière gauche et arrière droite comprenant chacune au moins une première section de fixation arrière (310) et une deuxième section de fixation arrière (320) faisant saillie de la paroi arrière dans la première direction, la deuxième section de fixation arrière étant disposée en-dessous de la première section de fixation arrière, la première section de fixation arrière comprenant un premier orifice de fixation arrière (30), et un premier orifice d'orientation arrière (31) correspondant à la première inclinaison de panneau (II), la deuxième section de fixation arrière comprenant un deuxième orifice de fixation arrière (32), et un deuxième orifice d'orientation arrière (33) correspondant à la deuxième inclinaison de panneau (II) ;
- Un système de pose (4) comportant un rail avant (4a) et un rail arrière (4b) destinés à recevoir au moins un panneau (II) solaire ;
- Deux équerres avant et deux équerres arrière (5), chacune composée d'une aile de support (5a) fixée au système de pose (4) et d'une aile de montage (5b) fixée à l'une des barres de soutien, l'aile de montage (5b) étant perpendiculaire à l'aile de support (5a), l'aile de montage comportant un trou de fixation (50) et d'au moins un trou d'orientation (51),
dans lequel pour une pose selon la première inclinaison de panneau, chacune des équerres avant est fixée à l'une des barres de soutien avant à l'aide d'un premier dispositif de fixation traversant le trou de fixation de l'équerre avant et l'orifice de fixation avant de la section de fixation avant, et d'un deuxième dispositif de fixation traversant le trou d'orientation de l'équerre avant et le premier orifice d'orientation avant de la section de fixation avant, et chacune des équerres arrière est fixée à l'une des barres de soutien arrière à l'aide d'un premier dispositif de fixation traversant le trou de fixation de l'équerre arrière et le premier orifice de fixation arrière de la première section de fixation arrière, et d'un deuxième dispositif de fixation traversant le trou d'orientation de l'équerre arrière et le premier orifice d'orientation arrière de la première section de fixation arrière,
et dans lequel pour une pose selon la deuxième inclinaison de panneau, chacune des équerres avant est fixée à l'une des barres de soutien avant à l'aide d'un premier dispositif de fixation traversant le trou de fixation de l'équerre avant et l'orifice de fixation avant de la section de fixation avant, et d'un deuxième dispositif de fixation traversant le trou d'orientation de l'équerre avant et le deuxième orifice d'orientation avant de la section de fixation avant, et chacune des équerres arrière est fixée à l'une des barres de soutien arrière à l'aide d'un premier dispositif de fixation traversant le trou de fixation de l'équerre arrière et le deuxième orifice de fixation arrière de la deuxième section de fixation arrière, et d'un deuxième dispositif de fixation traversant le trou d'orientation de l'équerre arrière et le deuxième orifice d'orientation arrière de la deuxième section de fixation arrière.

2. Support de fixation au sol selon la revendication 1, selon lequel les barres de soutien arrière gauche (3a) et arrière droite (3b) comprennent N sections de fixation arrière, avec N un entier naturel supérieur ou égal à 3.

3. Support de fixation au sol selon l'une des revendications 1 à 2, selon lequel la structure de maintien au sol comporte une base, deux parois latérales (1c), la paroi avant (1a) et la paroi arrière (1b) assemblées les unes aux autres de manière à former un espace de lestage, l'espace de lestage étant rempli d'un matériau lestant.

4. Support de fixation au sol selon l'une des revendications 1 à 3, selon lequel la barre de soutien avant gauche (2a), la barre de soutien avant droite (2b), la barre de soutien arrière gauche (3a) et la barre de soutien arrière droite (3b) sont des cornières.

5. Support de fixation au sol selon l'une des revendications 1 à 4, selon lequel les parois avant (1a), arrière (1b) et latérales (1c) sont assemblées aux barres de soutien avant et arrière suivant un système de montage crochet/orifice, chaque crochet étant complémentaire d'un orifice.

6. Support de fixation au sol selon l'une des revendications 1 à 5, selon lequel les équerres avant et les équerres arrière sont identiques.

7. Support de fixation au sol selon l'une des revendications 1 à 6, selon lequel les équerres avant et les équerres arrière comportent une pluralité de trous d'orientation.

8. Ensemble solaire (A) comportant un support de fixation au sol selon l'une des revendications 1 à 7 et au moins un panneau (II) solaire, le panneau (II) solaire étant fixé au système de pose (4).

9. Procédé de fixation au sol d'au moins un panneau (II) solaire maintenu par un support de fixation au sol comprenant les étapes suivantes :
* Fournir :
- une structure de maintien au sol (1) comprenant une paroi avant (1a) et une paroi arrière (1b),
- une barre de soutien avant gauche (2a) et une barre de soutien avant droite (2b) comprenant chacune une section de fixation avant (210), chaque section de fixation avant comprenant un orifice de fixation avant (20), un premier orifice d'orientation avant (21) et un deuxième orifice d'orientation avant (22),
- une barre de soutien arrière gauche (3a) et une barre de soutien arrière droite (3b), chacune comprenant au moins une première section de fixation arrière (310) et une deuxième section de fixation arrière (320), la deuxième section de fixation arrière étant disposée en-dessous de la première section de fixation arrière, la première section de fixation arrière comprenant un premier orifice de fixation arrière (30), un premier orifice d'orientation arrière (31), la deuxième section de fixation arrière comprenant un deuxième orifice de fixation arrière (32), et un deuxième orifice d'orientation arrière (33) ;
- un système de pose (4) comportant un rail avant (4a) et un rail arrière (4b),
- deux équerres avant et deux équerres arrière (5), chacune composée d'une aile de support (5a) et d'une aile de montage (5b), l'aile de montage (5b) étant perpendiculaire à l'aile de support (5a), l'aile de montage comportant un trou de fixation (50) et d'au moins un trou d'orientation (51),
- un panneau (II) solaire, et ;
* Monter :
- la barre de soutien avant gauche (2a) et la barre de soutien avant droite (2b) contre la structure de maintien au sol (1) de part et d'autre de la paroi avant (1a) de sorte que la barre de soutien avant gauche (2a) et la barre de soutien avant droite (2b) s'étendent selon une première direction, la section de fixation avant (210) faisant saillie de la paroi avant (1a) dans la première direction,
- la barre de soutien arrière gauche (3a) et la barre de soutien arrière droite (3b) contre la structure de maintien au sol (1), de part et d'autre de la paroi arrière (1b) de sorte que la barre de soutien arrière gauche (3a) et la barre de soutien arrière droite (3b) s'étendent selon la première direction, la première section de fixation arrière (310) faisant saillie de la paroi arrière dans la première direction,
* Choisir par l'opérateur entre une première inclinaison et une deuxième inclinaison pour la fixation du panneau (II) solaire,
* Si la première inclinaison a été choisie, fixer chacune des équerres avant (5) à l'une des barres de soutien avant à l'aide d'un premier dispositif de fixation traversant le trou de fixation (50) de l'équerre avant et l'orifice de fixation avant (20) de la section de fixation avant, et à l'aide d'un deuxième dispositif de fixation traversant le trou d'orientation (51) de l'équerre avant et le premier orifice d'orientation avant (21) de la section de fixation avant, et fixer chacune des équerres arrière à l'une des barres de soutien arrière à l'aide d'un premier dispositif de fixation traversant le trou de fixation (50) de l'équerre arrière et le premier orifice de fixation arrière (30) de la première section de fixation arrière, et à l'aide d'un deuxième dispositif de fixation traversant le trou d'orientation (51) de l'équerre arrière et le premier orifice d'orientation arrière (31) de la première section de fixation arrière,
* Si la deuxième inclinaison a été choisie, fixer chacune des équerres avant (5) à l'une des barres de soutien avant à l'aide d'un premier dispositif de fixation traversant le trou de fixation (50) de l'équerre avant et l'orifice de fixation avant (20) de la section de fixation avant, et à l'aide d'un deuxième dispositif de fixation traversant le trou d'orientation (51) de l'équerre avant et le deuxième orifice d'orientation avant (22) de la section de fixation avant, et fixer chacune des équerres arrière à l'une des barres de soutien arrière à l'aide d'un premier dispositif de fixation traversant le trou de fixation (50) de l'équerre arrière et le deuxième orifice de fixation arrière (32) de la deuxième section de fixation arrière, et à l'aide d'un deuxième dispositif de fixation traversant le trou d'orientation (51) de l'équerre arrière et le deuxième orifice d'orientation arrière (33) de la deuxième section de fixation arrière, et ;
* Fixer l'aile de support (5a) de chacune des deux équerres avants (5) au rail avant (4a) et l'aile de support (5a) de chacune des deux équerres arrières (5) au rail arrière (4b), et
* Fixer le panneau (II) solaire au rail avant et au rail arrière.

10. Procédé de fixation au sol selon la revendication précédente, selon lequel si une deuxième inclinaison a été choisie, le procédé comprend avant l'étape de fixation des équerres arrière, une étape de découpe des barres de soutien arrière suivant une ligne de découpe (34) séparant la première section de fixation arrière (310) de la deuxième section de fixation arrière (320).
